# EUROPEAN PATENT APPLICATION

(11) **EP 1 331 149 A2**
(43) Date of publication of application: **30.07.2003**
(21) Application number: 03250287.4
(22) Date of filing: 16.01.2003
(51) Int. Cl.: B60R 25/04

(54) **Keyless engine controlling unit**

(30) Priority: 24.01.2002 JP 2002016096
(71) Applicant: Suzuki, Chizuko, Hamamatsu-shi, Shizuoka-ken (JP)
(72) Inventor: Suzuki, Chizuko, Hamamatsu-shi, Shizuoka-ken (JP)
(74) Representative: Feakins, Graham Allan

(57) **Abstract**

A keyless engine controlling unit (1) where a driver can leave an automotive vehicle after locking an opening/closing means such as a door by using a key (3), and the key is not left in the automotive vehicle, thus preventing the vehicle from being stolen and also easily supervising the key (3) without a special spare key.

The keyless engine controlling unit is constructed by a set switch (10) for setting an engine (20) to be in a drive state, a selected state detecting means for detecting the position of a select lever (19) of an automatic transmission, and an engine drive controlling means (15) for bypassing a contact point of an ignition switch. During an engine operation, the selected state detecting means detects that the select lever (19) is in a parking range, and the set switch (10) is set, the contact point of the ignition switch (18) is bypassed, so that the engine is maintained in the drive state even if the key is extracted from the ignition switch.

## Description

The present invention relates to a keyless engine controlling unit in an automotive vehicle, where an engine is maintained in a drive state or can start even if a key is extracted from an ignition switch.

In the prior art, when a driver leaves from an automotive vehicle for a long time whilst keeping the engine running, doors are locked by using a spare key different from a key inserted into an ignition switch or by using a transmitter of a keyless entry system in order to prevent the vehicle from being stolen or the like. The reason why an engine is left in a drive state is keeping an air conditioner in operation to maintain the temperature inside of the vehicle or warming up the engine by an idling operation so as to obtain a stable running characteristic from a starting time.

However, since the spare key different from the key or the transmitter of a keyless entry system is necessary, it is troublesome to manage the keys.

Also, if a window glass is broken to unlock the vehicle, since the key is left in the ignition switch, the vehicle is easily stolen by the usual drive operation.

In view of the foregoing circumstances, an object of the present invention is to provide a keyless engine controlling unit where a driver can leave the vehicle by locking an opening/closing means such as a door by using a key, and the key is not left in the vehicle, thus preventing the vehicle from being stolen and also easily supervising the key without a special spare key.

An object of the present invention is to provide a keyless engine controlling unit where a driver can leave from an automotive vehicle after locking an opening/closing means such as a door by using a key, and the key is not left in the vehicle, thus preventing the vehicle from being stolen and also easily supervising the key without a special spare key.

The keyless engine controlling unit is constructed by a set switch for setting an engine to be in a drive state, a selected state detecting means for detecting the position of a select lever of an automatic transmission, and an engine drive controlling means for bypassing a contact point of an ignition switch. During an engine operation, the selected state detecting means detects that the select lever is in a parking range, and the set switch is set, the contact point of the ignition switch is bypassed, so that the engine is maintained in the drive state even if the key is extracted from the ignition switch.

The keyless engine controlling unit according to one aspect is characterised by comprising a set switch for setting an engine drive maintaining state, a selected state detecting means for detecting a select lever position of an automatic transmission, and an engine drive controlling means for bypassing a contact point of an ignition switch, wherein, when an engine is in a drive state, the selected state detecting means detects that the select lever is positioned in a parking range, and the set switch is set, the contact point of the ignition switch is bypassed, thus maintaining the drive state of the engine even when a key is extracted from the ignition switch.

The keyless engine controlling unit according to a second aspect is characterised by comprising a locked state detecting means for detecting a state of a door lock switch for operating a door lock means, a selected state detecting means for detecting a select lever state of an automatic transmission, and an engine drive controlling means for bypassing a contact point of an ignition switch, wherein, when an engine is in a drive state, the selected state detecting means detects that a select lever is positioned in a parking range, and the door lock switch of a door on a driver's seat side is turned on and off by a predetermined number of operations, the contact point of the ignition switch is bypassed, thus maintaining the drive state of the engine even when a key is extracted from the ignition switch.

The keyless engine controlling unit according to a third aspect is characterised by comprising a locked state detecting means for detecting a state of a door lock switch for operating a door lock means, a selected state detecting means for detecting a select lever state of an automatic transmission, and an engine drive controlling means for bypassing a contact point of an ignition switch, wherein, when an engine is in a drive state, the selected state detecting means detects that a select lever is positioned in a parking range, and the door lock switch is turned on while a door on a driver's seat side is opened and the door is then closed, the contact point of the ignition switch is bypassed, thus maintaining the drive state of the engine even when a key is extracted from the ignition switch.

The keyless engine controlling unit may be such that, when an engine drive controlling means is shifted to a state for maintaining a drive state of an engine, an opening/closing means is unlocked.

A stolen state detecting means may be provided for detecting a vehicle in a stolen state by detecting an opened/closed state of an opening/closing means, and a burglar proof means having an alarm means for alarming when the stolen state detecting means detects that the vehicle is in a stolen state, wherein, under a drive state of an engine where a key has been extracted from an ignition switch, a door lock means is operated by using the key, so that the opening/closing means is locked and the burglar proof means is set in an alert state.

The controlling unit may have a keyless entry unit having a transmitting means for transmitting a predetermined peculiar signal and a receiving means provided in a vehicle for receiving the peculiar signal from the transmitting means for locking and unlocking an opening/closing means without a key, and a burglar proof means having a stolen state detecting means for detecting the automotive vehicle in a stolen state by detecting an opened/closed state of the opening/closing means, and an alarm means for alarming when the stolen state detecting means detects that the vehicle is in a stolen state, wherein, under a drive state of an engine where the key has been extracted from an ignition switch, the keyless entry unit is used, so that the opening/closing means is locked and the burglar proof means is set in an alert state.

The controlling unit may be such that, under a drive state of an engine where a key has been extracted from an ignition switch, when the key is inserted into the ignition switch, an engine drive controlling means opens a contact point of the ignition switch to stop the engine.

The controlling unit may be such that, under a drive state of an engine where a key has been extracted from an ignition switch, when an opening/closing means is unlocked by operating a door lock means, an engine drive controlling means opens a contact point of the ignition switch to stop the engine.

The controlling unit may be such that, under a drive state of an engine where a key has been extracted from an ignition switch, when an opening/closing means is unlocked by using a keyless entry unit, an engine drive controlling means opens a contact point of the ignition switch to stop the engine.

The controlling unit may be such that, under a drive state of an engine where a key has been extracted from an ignition switch, when an opening/closing means is unlocked by using a keyless entry unit, an alert state of a burglar proof means is cancelled.

The controlling unit may be such that, under a drive state of an engine where a key has been extracted from an ignition switch, when a stolen state detecting means detects that a vehicle is in a stolen state, an engine drive controlling means opens a contact point of the ignition switch to stop the engine.

The controlling unit may be such that, under a drive state of an engine where a key has been extracted from an ignition switch, when a selected state detecting means detects that said select lever is shifted to a position other than said parking range, an engine drive controlling means opens a contact point of the ignition switch to stop the engine.

The controlling unit may be such that, under the condition that a drive state of an engine is maintained even when a key is extracted from an ignition switch, only when the key is inserted into the ignition switch and turned on, a select lever can be operated.

According to a fourth aspect, the keyless engine controlling unit comprises a selected state detecting means for detecting a select lever state of the automatic transmission and an engine drive controlling means for bypassing a contact point of an ignition switch, wherein, when the selected state detecting means detects that a select lever is positioned in a parking range, and a receiving means receives a signal for locking an opening/closing means under a locked state of the opening/closing means, the contact point of the ignition switch is bypassed to operate a starter motor, so that an engine is started.

The controlling unit may also be such that, under a locked state of an opening/closing means, when a receiving means receives a signal for unlocking the opening/closing means and then receives a signal for locking the opening/closing means within a predetermined time, a contact point of an ignition switch is bypassed to operate a starter motor, so that an engine is started.

An informing means may be provided for informing of an engine being driven after verifying a drive state of the engine.

The controlling unit may be such that, under a drive state of an engine where a receiving means of a keyless entry unit receives a signal for locking an opening/closing means, when the receiving means receives at least once the signal for locking the opening/closing means, an engine drive controlling means opens a contact point of an ignition switch to stop the engine.

An informing means may be provided that informs of an engine in a stopped state after verifying a stopped state of the engine.

An engine drive controlling means may be provided in a single unit with an engine control unit for driving or stopping the engine.

For a better understanding of the invention and to show how the same may be carried into effect, reference will now be made, by way of example, to the accompanying drawings, in which:-
Fig. 1 is a view illustrating a keyless engine controlling unit.
Fig. 2 is a detailed view illustrating the unit shown in Fig. 1.
Fig. 3 is a flowchart for explaining a method for maintaining an engine drive maintaining state.
Fig. 4 is a flowchart for explaining a detailed method for maintaining the engine drive maintaining state.
Fig. 5 is a flowchart for explaining an operation when the engine drive maintaining state is maintained.
Fig. 6 is a flowchart for explaining an unlocking operation when the engine drive maintaining state is maintained.
Fig. 7 is a flowchart for explaining a key operation when the engine drive maintaining state is maintained.
Fig. 8 is a view illustrating a detailed keyless entry unit, and
Fig. 9 is a flowchart for explaining an engine starting operation.

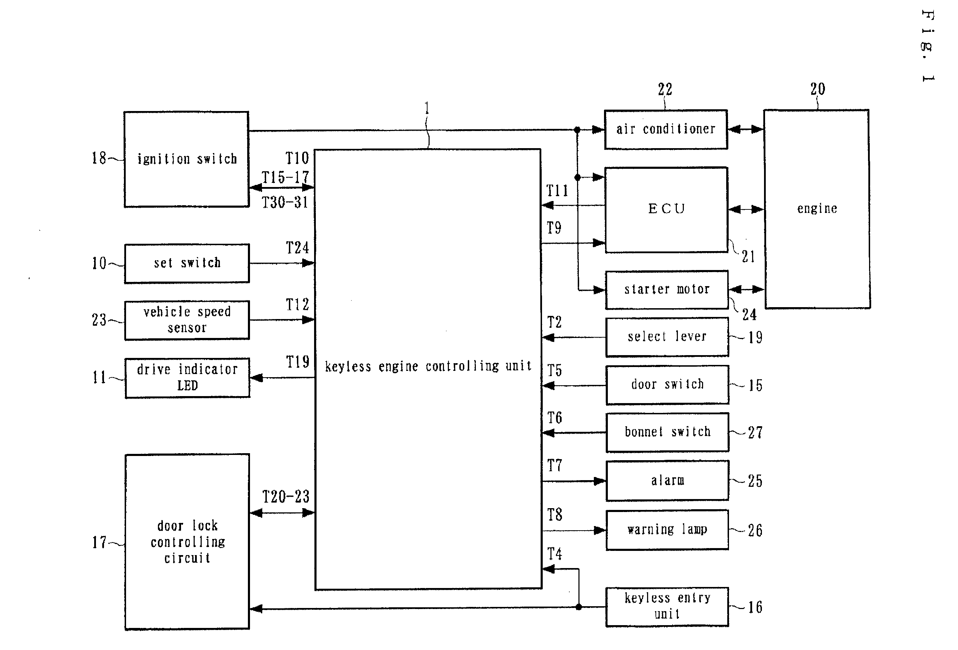

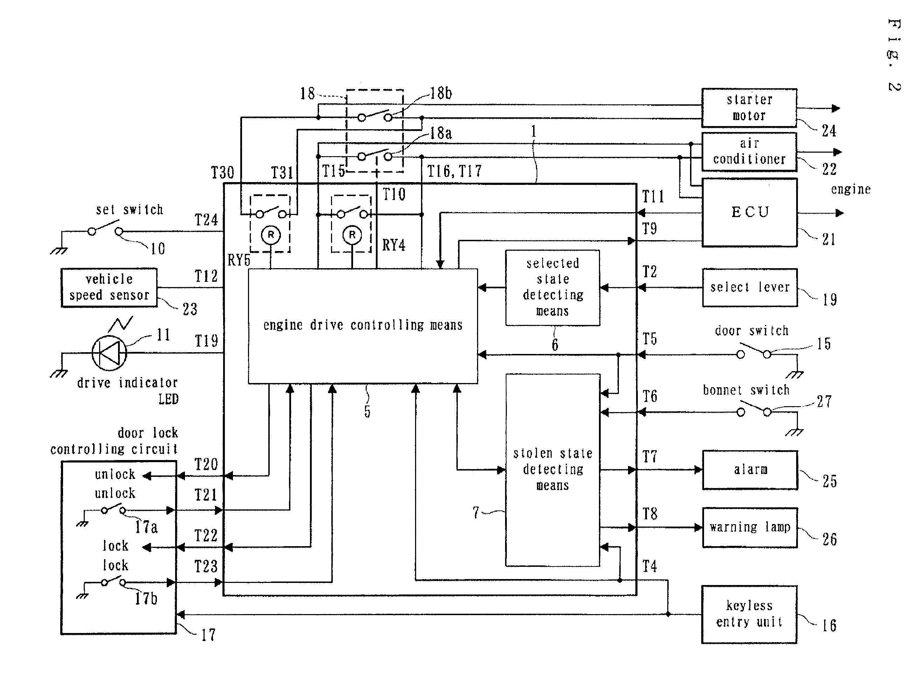

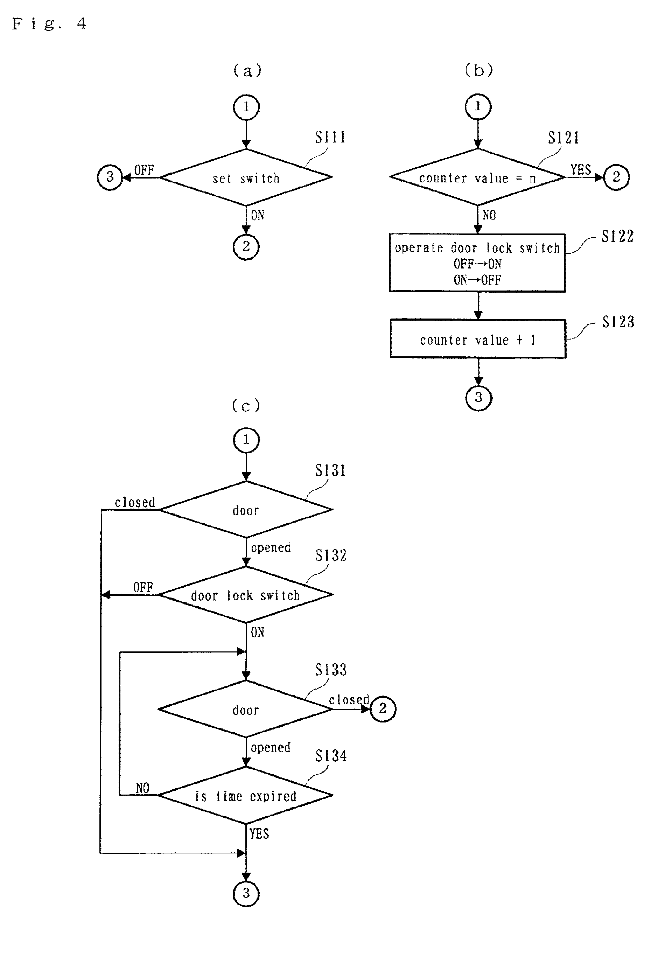

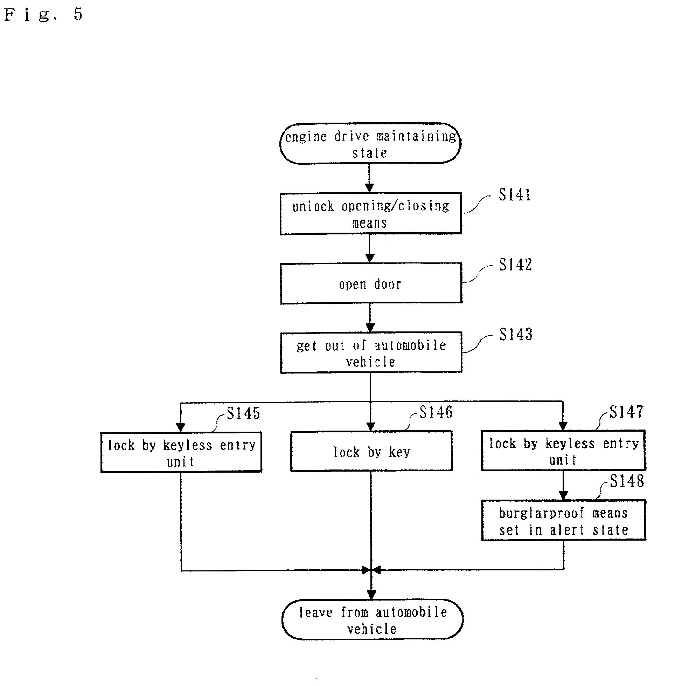

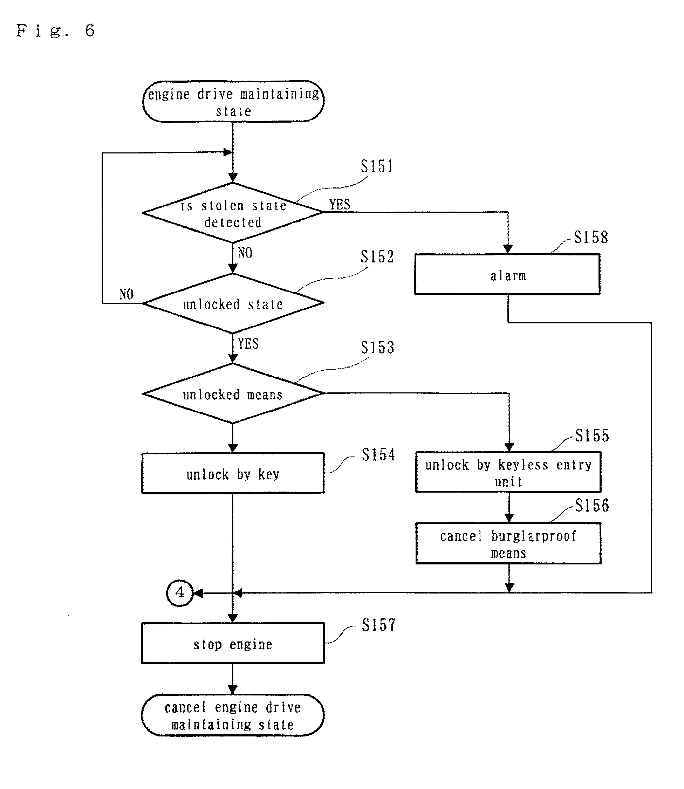

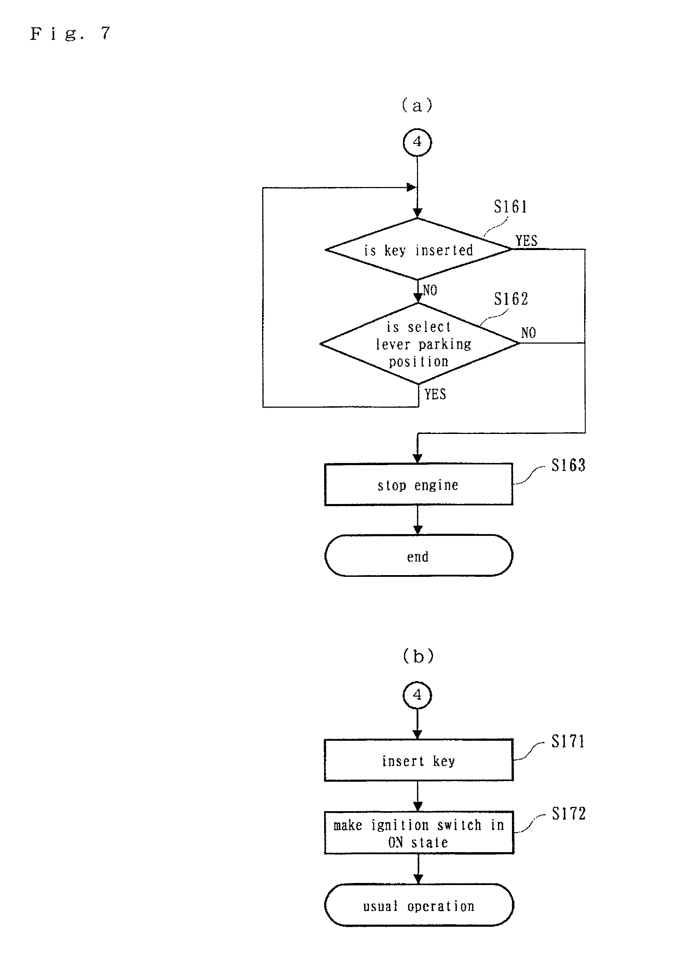

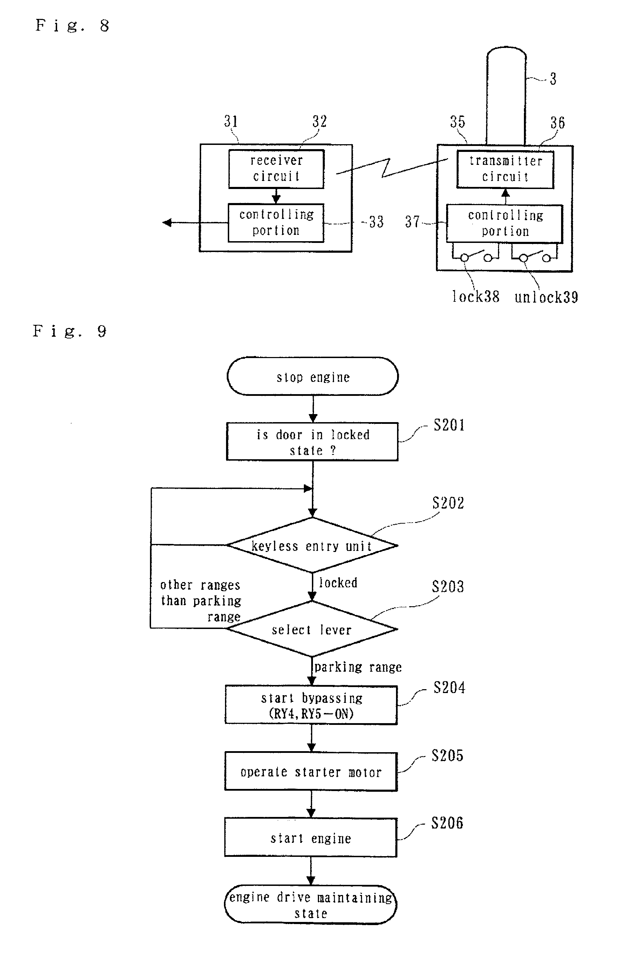

As shown in Figs. 1 to 8, a keyless engine controlling unit 1 can maintain a drive state of an engine 20 by bypassing an ignition switch 18 even when a key 3 is extracted from an ignition switch 18. The keyless engine controlling unit 1 is comprised of devices such as a microprocessor for performing a control upon various kinds electronic units and carries out a programmable sequence (control) by software, thus realising various functions, which will be stated later. Specifically, an engine drive controlling means 5, a selected state detecting means 6, a stolen state detecting means 7 and the like are realised by software. Note that, the keyless engine controlling unit 1 is not limited to the structure operated by software. The same functions can be realised by hardware only. Fig. 8 is a view illustrating a detailed keyless entry unit.

The engine drive controlling means 5 controls the operation of the engine 20 in accordance with various signals inputted to the keyless engine controlling unit 1. The selected state detecting means 6 detects a position where a select lever 19 is. The stolen state detecting means 7 detects a state of an opening/closing means to determine whether or not an automotive vehicle is stolen.

The keyless engine controlling unit 1 is connected to varieties of conventional electronic units provided for an automotive vehicle. As the states of the electronic units are inputted to the keyless engine controlling unit 1, the electronic units are operated in accordance with instructions (outputs) from the keyless engine controlling unit 1. Next, the varieties of conventional electronic units connected to the keyless engine controlling unit 1 will be explained.

An ignition switch 18 turns on and off the electronic unit circuits by inserting thereinto and turning the key 3. The ignition switch 18 has an ON contact point 18a as well as an ACC contact point (not shown) for operating accessories such as an audio unit and a start contact point 18b for operating a starter motor 24. The ON contact point 18a is connected to the keyless engine controlling unit 1 and a relay RY 4, so that the keyless engine controlling unit 1 can detect the state of the ON contact point 18a. In addition, when the relay RY 4 is turned on, the respective electronic units can be operated as if the ON contact point 18a is turned on even if the ON contact point 18a is not turned on. The start contact point 18b is connected to the contact points of a relay RY 5. When the relay RY 5 is turned on, the respective electronic units can be operated as if the start contact point 18b is turned on even if the start contact point 18b is not turned on. Also, the ignition switch 18 includes a circuit for detecting a signal (T10) showing whether the key 3 is inserted, and the signal is supplied to the keyless engine controlling unit 1.

An ECU 21 is an engine control unit for driving or stopping the engine 20. The control of the engine 20 will be carried out by an ON/OFF operation of the ON contact point 18a of the ignition switch 18. The ECU 21 detects a signal (T11) showing a drive state of the engine 20, and transmits the signal to the keyless engine controlling unit 1.

The starter motor 24 drives the engine 20 when the engine 20 is stopped. The control of the engine 20 will be carried out by an ON/OFF operation of the start contact point 18b of the ignition switch 18.

An air conditioner 22 adjusts the room temperature of the vehicle. The air conditioner 22 is also controlled by an ON/OFF operation of the ON contact point 18a of the ignition switch 18. A vehicle speed sensor 23 measures a running speed of the vehicle and also can detect whether or not the vehicle is actually stopped.

The select lever 19 for changing the state of an automatic transmission of the vehicle can carry out a shifting operation for a parking range for maintaining the automotive vehicle in a stopped state, a drive range for connecting the engine 20 to drive wheels to run forward, or the like.

A door lock controlling circuit 17 is a door lock means for controlling a lock/unlock of a door opening/closing means or the like. In concrete terms, a lock/unlock operation of the door is performed by operating a lock/unlock solenoid by a door lock switch (unlock) 17a and a door lock switch (lock) 17b. Also, the lock/unlock operation can be performed by signals (T20, T22) from the keyless engine controlling unit 1 or a signal (T4) from a keyless entry unit 16 which will be stated later. Signals (T21, T23) of the door switches 17a and 17b are transmitted to the keyless engine controlling unit 1.

A door switch 15 detects whether a door is actually opened or closed (T5). Also, a bonnet switch 27 detects whether a bonnet is actually opened or closed (T6). An alarm 25 informs of theft by sending a sound, a radio wave or the like when the vehicle theft is detected by the stolen state detecting means 7, which will be stated later. And, a warning lamp 26 informs of the automotive vehicle theft by emitting light when the automotive vehicle is stolen.

A keyless entry unit 16 has a transmitter means for transmitting a predetermined peculiar signal and a receiver means provided in the vehicle for receiving the peculiar signal from the transmitter means, and locks or unlocks the opening/closing means without the key. A concrete one of the receiving means is a receiver 31 shown in Fig. 8, and is formed by a receiver circuit 32 for receiving the peculiar signal transmitted from the transmitter means and a controlling portion 33 for transmitting the peculiar signal received by the receiver circuit 32 to the keyless engine controlling unit 1 and the door lock controlling circuit 17. Also, the transmitter means is comprised of a controlling portion 37 for generating a code and the like of the peculiar signal to be transmitted to the receiver 31, and a transmitter circuit 36 for transmitting the particular signal as a radio signal. The transmitter 35 is provided in one body of the key 3. Also, a lock switch 38 and an unlock switch 39 for indicating that the opening/closing means is locked and unlocked are connected to the controlling portion 37.

A set switch 10 sets the automotive vehicle in an engine drive maintaining state. Also, when the automotive vehicle is in the engine drive maintaining state, a drive indicator LED 11 is turned on.

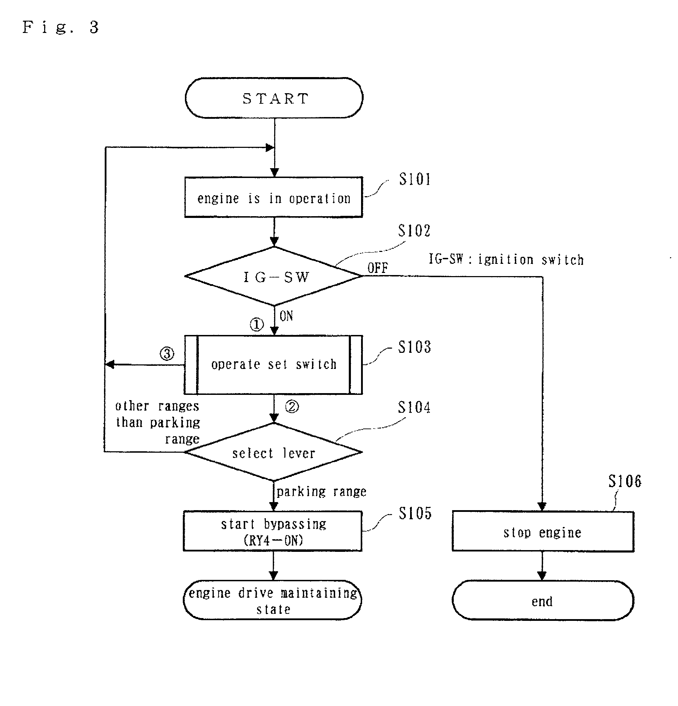

Next, a handling method and operation of the keyless engine controlling unit 1 according to the present embodiment will be explained. Note that, in the following explanation of the present embodiment, reference numerals in parentheses correspond to the reference numerals shown on flowcharts of Figs. 3 to 7 and Fig. 9. First, when the key 3 is inserted into the ignition switch 18 of the vehicle and is turned to a start position, the ON contact point 18a and the start contact point 18b are closed to drive the starter motor 24, thus driving the engine 20 (S101). In the drive state of the engine 20, the vehicle is operated as usual.

Assumed that, when the vehicle is operated, for example, the vehicle is needed to stop in a parking lot of a store for shopping. In this case, particularly, in the hottest time of year or the coldest time of year, when the vehicle is left in a parking place for a short time, the temperature inside of the vehicle is required to be maintained by continuing the operation of the air conditioner 22. In such a situation, the vehicle can be left by carrying out the following operation.

First, the engine drive controlling means 5 verifies whether or not the ON contact point 18a of the ignition switch 18 is closed, i.e., the ignition switch 18 is in an ON state (S102). If the ignition switch 18 is turned off as usual (S102) while the engine is in a drive state (S101), the engine is usually stopped (S106). If the ignition switch 18 is ON, it is verified whether or not a set operation is performed (S103). The set operation indicates that the engine is set in the engine drive maintaining state where the engine 20 is maintained in the drive state even if the key 3 is extracted from the ignition switch 18. The driver may carry out the set operation (S103). When the set operation (S103) is not carried out, the engine drive maintaining state (S101) is continued.

One way of the set operation (S103) is carried out by pushing the set switch 10 provided around the ignition switch 18 in a console panel in front of the driver's seat or another position (S111). When detecting that the set switch 10 is pushed, the engine drive controlling means 5 proceeds to further concrete steps for setting the engine in an engine drive maintaining state. Another way of the set operation (S103) uses the door lock switches 17a and 17b on the side of the driver's seat without using the set switch 10. First, the number (n at 121) of the operations of the door lock switches 17a and 17b is predetermined. The number corresponds to the same state as set by the set switch 10 (n is generally as a fixed value in a program).

For example, every time the door lock switch 17a is turned on (S122), a counter value is added by 1 (S123). It is determined whether or not the counter value is equal to n (S121). When the counter value is equal to n after the door lock switch 17a is repeatedly turned on, it is assumed that the set operation (S103) is carried out. The operation of the counter value addition can be carried out by only the operation of the door lock switch 17a, only the operation of the door lock switch 17b or the alternate operation of the door lock switch 17a and the door lock switch 17b. Note that, the number (n) of the operations of the door lock switches 17a and 17b can be arbitrarily determined. The set operation (S103) is carried out without the set switch 10, so that the reduction in cost and the set operation (S103) can be easily ensured.

A further way of the set operation (S103) is related to an opening/closing of the door on the side of the driver's seat. This way is carried out by opening the door on the driver's seat once (S131), turning on the door lock switches 17a and 17b (S132) and finally closing the door (S133) within a predetermined time (S134).

After the set operation (S103) is carried out, the engine drive controlling means 5 verifies the state of the select lever 19 (S104). The verification is carried out according to the information sent from the selected state detecting means 6 for detecting what position the select lever 19 is in. Only when the select lever 19 is in a parking range at step where the set operation (S103) is carried out, can an engine drive maintaining state be realised. When the select lever 19 is not in the parking range, even if the set operation (S103) is carried out, the engine drive maintaining state cannot be realised. Therefore, the careless start of the vehicle can be avoided, thus ensuring safety. Note that, in the case of a manual transmission vehicle, only when a shift lever of the manual transmission is in a neutral state, can the engine drive maintaining state be realised. Furthermore, in order to ensure safety, it may be designed so that the engine drive maintaining state can be realised after it is verified by the vehicle speed sensor 23 whether the vehicle is stopped.

After the select lever 19 in the parking range is verified (S104), the relay RY 4 is turned on, so that the ON contact point 18a of the ignition switch 18 is bypassed (S105). Accordingly, even if the key 3 is rotated and extracted from the ignition switch 18, the state where the ON contact point 18a is closed is maintained, thus realising an engine drive maintaining state. In order to indicate the engine drive maintaining state of the vehicle to the driver, the drive indicator LED 11 can be mounted in the proximity to the ignition switch 18. The driver extracts the key 3 from the ignition switch 18 and opens the door (S142) to get out of the vehicle (S143), and then, locks the opening/closing means (S145, S146) such as the door by using the key 3 or the keyless entry unit 16. After that, the driver leaves the vehicle in the engine drive maintaining state. As stated above, since the driver can leave his/her automotive vehicle by locking the opening/closing means such as the door by using the key 3, the key is not left in the vehicle, thus preventing the vehicle from being stolen and also easily supervising a key without a special spare key.

Note that, when the vehicle is in the engine drive maintaining state, the engine drive controlling means 5 may unlock a door key (S141) by indicating to the door lock controlling circuit 17. A burden to unlock the door key is saved, so that the driver can open the door with ease and get out of the vehicle.

Also, in a vehicle provided with a burglar proof means, the opening/closing means is locked by using the key 3 and also the burglar proof means may be set in an alert state, thus easily preventing the vehicle from being stolen even if the engine is being driven. In addition, the opening/closing means is locked by using the transmitter 35 of the keyless entry unit 16 and also the burglar proof means may be set in an alert state (S148).

Next, the handling and operation of the present embodiment after the driver has come back to the vehicle in the engine drive maintaining state will be explained. The driver unlocks the door and gets in the vehicle by using the key 3 or the keyless entry unit 16. After that, the key is inserted into the ignition switch 18 (S171) and is rotated to set the ignition switch 18 in an ON state (S172). The engine drive controlling means 5 detects this operation of the ignition switch 18 by the key 3 and cancels the engine drive maintaining state (the relay (RY 4) is turned off to cancel a bypassing operation) to return the vehicle to a usual driving state of the engine. Thus, the driver can start the vehicle.

The case of a usual start of the vehicle without stopping the engine 20 in an engine drive maintaining state is explained. However, in order to avoid the careless start of the automotive vehicle and further ensure safety further, the engine 20 may be once stopped at restarting the automotive vehicle by the following method.

First, in a vehicle having a burglar proof means, when the door switch 15 indicates an open state in spite of the vehicle being in a locked state or the bonnet switch 27 indicates an open state bonnet, the stolen state detecting means 7 detects that the vehicle is stolen in accordance with these switch information (S151). Then, the alarm 25 and the warning lamp 26 are operated (S158) and also the engine 20 is stopped by the stolen state detecting means 7 in co-operation with the engine drive controlling means 5 (S157). The engine drive controlling means 5 turns off the relay RY 4 and cancels the bypassing operation of the ON contact point 18a of the ignition switch 18, so that the engine 20 is stopped. In this case, the engine drive controlling means 5 can transmit a signal T9 for prohibiting the ECU 21 from controlling the engine, so that the engine is not started even if the starter motor 24 is forcibly rotated. When the engine 20 is stopped, even if the vehicle is in the engine drive maintaining state, it is possible to more certainly prevent the vehicle from being stolen.

Despite the presence or absence of the burglar proof means, when the opening/closing means is unlocked by the key 3 or the keyless entry unit 16, the engine 20 may be stopped. In concrete terms, when the engine drive controlling means 5 detects an unlocked state (S152), an unlocked means is determined (S153) and other processes are carried out. Then, the engine 20 is stopped (S157). For example, when the unlock operation is carried out by the key 3 (S154), the engine 20 is immediately stopped. When the unlock operation is carried out by the keyless entry unit 16 (S155), an alert state of the burglar proof means is cancelled (S156). Note that, in the case where the driver leaves the vehicle and a fellow passenger remains in the vehicle, when the fellow passenger operates the door lock switch 17a to operate the door lock controlling circuit 17 within the vehicle, the engine 20 may be stopped as well.

Also, after the driver gets in the vehicle, when the insertion of the key 3 into the ignition switch 18 is detected (S161), the engine 20 may be stopped. Also, even when the select lever 19 is erroneously operated, in order to avoid the careless start of the automotive vehicle and ensure safety, when the select lever 19 is shifted to a position other than the parking range(S162), the engine 20 may be stopped. Also, similar effect can be obtained by causing the select lever 19 in a fixed state when the key 3 inserted in the ignition switch 18 is in a state other than ON.

Next, another function of the keyless engine controlling unit 1 will be explained. This function is to start the engine 20 from outside the vehicle where the engine is in a stopped state. This is effective for warming up the engine in advance in winter under the condition that the opening/closing means is locked. In concrete terms, under the condition that the engine is in a stopped state and also the opening/closing means is locked (S201), the lock switch 38 of the transmitter 35 of the keyless entry unit 16 is closed by a pushing operation in the proximity of the vehicle (S202). When receiving the signal of the operation of the lock switch 38 via the receiver 31, the engine drive controlling means 5 recognises the position of the select lever 19 (S203). When it is recognised in accordance with the information from the selected state detecting means 6 that the select lever 19 is in the parking range, the engine drive controlling means 5 closes the relay RY 4 to bypass the ON contact point 18a of the ignition switch 18 (S204). Consecutively, the relay RY 5 is closed to bypass the start contact point 18b (S204).

As the start contact point 18b is bypassed, the starter motor 24 is operated (S205), thus starting the engine 20 (S206). Accordingly, the engine 20 is started without inserting the key 3 into the ignition switch 18, and the key is not left in the vehicle, thus preventing the vehicle from being stolen and also easily supervising the key without a special spare key. Moreover, since the select lever 19 in the parking range is recognised, the careless start of the vehicle can be avoided, thus ensuring safety. Note that, this starting operation of the engine is carried out when the engine drive controlling means 5 detects that the engine 20 is in the stopped state in accordance with the signal T11 of the ECU 21. When the engine is being driven, the following operation is carried out.

Note that, in order to make it possible to recognise whether or not the engine 20 is actually started even from a place apart from the vehicle, headlights, vehicle parking lights or turn signal lights may be illuminted as an informing means. In this case, an informing operation is carried out when the engine drive controlling means 5 detects that the engine 20 is in a drive state in accordance with the signal T11 of the ECU 21. Note that, since a momentary lighting may be missed, the vehicle side lights may be left on. Also, for the informing means, sound information such as a horn tooting other than the light information can be used, whatever the operator can recognise. Therefore, it is possible to recognise the engine 20 being in a drive state from outside the vehicle, and also even when the engine 20 cannot be started, the trouble can be recognised, thus ensuring safety of the vehicle.

Note that, when the transmitter 35 of the keyless entry unit 16 has no more than one switch, after the switch is once operated to unlock, the switch may be again operated within a predetermined time (within 30 seconds, for example) so that the engine 20 is started.

In order to stop the engine 20 in a drive from state outside the vehicle, the lock switch 38 of the transmitter 35 is operated. The engine drive controlling means 5 receives the lock signal via the receiver 31 to open the relay 4, so that the bypassing operation of the ON contact point 18a is cancelled to stop the engine 20. Thus, the engine 20 is easily stopped by a simple operation such as an operation of pushing the lock switch 38. Note that, in order to make it possible to recognise whether or not the engine 20 is actually stopped even from a place apart from the vehicle, headlights, vehicle side lights or direction indicator lights may be used as an informing means. In this case, an informing operation is carried out when the engine drive controlling means 5 detects that the engine 20 is in a stopped state in accordance with the signal T11 of the ECU 21. Also, for the informing means, sound information such as a horn tooting other than the light information can be used, whatever the operator can recognise. It is possible to avoid forgetting to stop the engine 20 by the informing operation, thus ensuring safety of the vehicle.

Note that, when the transmitter 35 of the keyless entry unit 16 has no more than one switch, after the switch is once operated to unlock, the switch may be again operated within a predetermined time (within 30 seconds, for example) so that the engine 20 is stopped.

Note that, the keyless engine controlling unit 1 and the ECU 21 are separately constructed on respective electrical boards in this embodiment. However, since any of the units can be realised by using a microcomputer, it is possible to provide both of the units in one body, so that the number of parts can be reduced and the cost can be reduced.

It will be appreciated that since an engine drive controlling means for maintaining a drive state of an engine is provided even when a key is extracted from an ignition switch with a set switch set, it is possible to lock an opening/closing means by using the key and leave from the vehicle maintaining an air conditioner and the like in operation without stopping the engine. Owing to this, the key is not left in the vehicle, thus preventing the vehicle from being stolen and also easily supervising the key without a special spare key.

Also, when a select lever of an automatic transmission is positioned in a parking range, since the drive state of the engine is maintained even when the key is extracted from the ignition switch, a careless start of the vehicle can be avoided, thus ensuring safety.

In addition, owing to a predetermined number of operations of a door lock switch of a door on the side of a driver's seat, since the drive state of the engine is maintained even when the key is extracted from the ignition switch, there is no need to newly provide another key, and also a set operation is easy.

In addition, when the door lock switch is turned on under the condition that the door on the side of the driver's seat is opened and then the door is closed, since the drive state of the engine is maintained even when the key is extracted from the ignition switch, there is no need to newly provide another key, and also a set operation is easy.

Furthermore, since the opening/closing means is unlocked as the engine drive controlling means is shifted to a state for maintaining the drive state of the engine, the need to unlock the door key is saved, so that the driver can open the opening/closing means with ease and get out of the vehicle.

Since the door lock means may be operated by using the key to lock the opening/closing means and also a burglar proof means can be set in an alert state, even if the engine is in the drive state, the vehicle can be prevented from being stolen by an easy operation.

Since the opening/closing means may be locked by using a keyless entry unit and also the burglar proof means can be set in an alert state, the vehicle can be prevented from being stolen by an easy operation.

It will be appreciated that when the key is inserted into the ignition switch, the engine drive controlling means stops the engine, so that a careless start of the vehicle can be avoided, thus ensuring safety.

Also, when the opening/closing means is unlocked by operating the door lock means, the engine drive controlling means stops the engine, so that even when the select lever is erroneously operated after the driver returned to the vehicle and opened the opening/closing means to get in the vehicle, a careless start of the vehicle can be avoided, thus ensuring safety.

Similarly, when the opening/closing means is unlocked by the keyless entry unit, the engine drive controlling means stops the engine, so that even when the select lever is erroneously operated after the driver returned to the vehicle and opened the opening/closing means to get in the vehicle, a careless start of the vehicle can be avoided, thus ensuring safety.

When the opening/closing means is unlocked by the keyless entry unit, the alert state of the burglar proof means is cancelled. Owing to this, it is impossible to get in the vehicle without having a proper transmitter of the keyless entry unit, thus preventing the vehicle with the drive state engine from being stolen.

When the stolen state detecting means detects a theft, the engine is stopped, so that the vehicle theft can further be surely avoided.

Since the engine may be stopped when a selected state detecting means detects that the select lever is shifted to a position other than the parking range, even when the select lever is erroneously shifted, a careless start of the vehicle can be avoided, thus ensuring safety.

Furthermore, only when the key is inserted and the ignition switch is turned on, it is possible for the select lever to be operated, so that even when the select lever is erroneously operated, a careless start of the automotive vehicle can be avoided, thus ensuring safety.

It will be appreciated that it is possible for the driver to leave the vehicle while the engine is started by the transmitter of the keyless entry unit and the opening/closing means is locked. Owing to this, the key is not left in the automotive vehicle, thus preventing the vehicle from being stolen and also easily supervising the key without a special spare key.

Moreover, since the select lever in the parking range has been verified, a careless start of the vehicle can be avoided, thus ensuring safety.

As described above, it is possible for the driver to leave from the automotive vehicle while the engine is started by the transmitter of the keyless entry unit and the opening/closing means is locked. Owing to this, the key is not left in the vehicle, thus preventing the vehicle from being stolen and also easily supervising the key without a special spare key.

Moreover, since the select lever in the parking range has been verified, a careless start of the vehicle can be avoided, thus ensuring safety.

Since an informing means for informing of the drive state engine may be provided, after verifying the drive state engine, it is possible to recognise the drive state engine from outside the vehicle, and also even when the engine is not started, the trouble can be recognised, thus ensuring safety of the vehicle.

Furthermore, the engine can be easily stopped without unlocking the opening/closing means.

Since the informing means can be arranged to inform of the stopped state engine after verifying the stopped state engine, the engine is prevented from being allowed to continue running, thus ensuring safety of the vehicle.

Since the engine drive controlling means may be provided as a single unit with the engine control unit for controlling the drive state and the stopped state of the engine, reduction in cost and a saving in the number of parts can be realised.

## Claims

1. A keyless engine controlling unit (1) for controlling an engine (20) of an automotive vehicle, comprising:
an ignition switch (18) for generating starting and stopping instructions of said engine by inserting and operating a key (3) thereinto;
a door lock means (17) for locking an opening/closing means such as a door; and
an automatic transmission,
**characterised in that** said controlling unit (1) further comprises:
a set switch (10) for setting an engine drive maintaining state;
a selected state detecting means for detecting a select lever (19) position of said automatic transmission; and
an engine drive controlling means (15) for bypassing a contact point of said ignition switch,
wherein, when said engine (20) is in a drive state, said selected state detecting means detects that said select lever (19) is positioned in a parking range, and said set switch is set, said contact point of said ignition switch (18) is bypassed, thus maintaining said drive state of said engine even when said key (3) is extracted from said ignition switch.

2. A keyless engine controlling unit for controlling an engine (20) of an automotive vehicle, comprising:
an ignition switch (18) for generating starting and stopping instructions of said engine by inserting and operating a key (3) thereinto;
a door lock means (17) for locking an opening/closing means such as a door; and
an automatic transmission,
**characterised in that** said controlling unit (1) further comprises:
a locked state detecting means for detecting a state of a door lock switch (15) for operating said door lock means;
a selected state detecting means for detecting a select lever (19) state of said automatic transmission; and
an engine drive controlling means for bypassing a contact point of said ignition switch (18),
wherein, when said engine is in a drive state, said selected state detecting means detects that said select lever (19) is positioned in a parking range, and said door lock switch of a door on a driver's seat side is turned on and off by a predetermined number of operations, said contact point of said ignition switch (18) is bypassed, thus maintaining said drive state of said engine even when said key (3) is extracted from said ignition switch.

3. A keyless engine controlling unit for controlling an engine (20) of an automotive vehicle, comprising:
an ignition switch (18) for generating starting and stopping instructions of said engine by inserting and operating a key (3) thereinto;
a door lock means (17) for locking an opening/closing means such as a door; and
an automatic transmission;
**characterised in that** said controlling unit (1) further comprises:
a locked state detecting means for detecting a state of a door lock switch (15) for operating said door lock means;
a selected state detecting means for detecting a select lever (19) state of said automatic transmission; and
an engine drive controlling means for bypassing a contact point of said ignition switch (18),
wherein, when said engine (20) is in a drive state, said selected state detecting means detects that said select lever (19) is positioned in a parking range, and said door lock switch (15) is turned on while a door on a driver's seat side is opened and said door is then closed, said contact point of said ignition switch (18) is bypassed, thus maintaining said drive state of said engine even when said key (3) is extracted from said ignition switch.

4. A unit according to claim 1, 2 or 3, wherein when said engine drive controlling means is shifted to a state for maintaining a drive state of said engine, said opening/closing means is unlocked.

5. A unit according to any one of the preceding claims, comprising a stolen state detecting means for detecting said vehicle in a stolen state by detecting an opened/closed state of said opening/closing means, and a burglar proof means having an alarm means for alarming when said stolen state detecting means detects that said vehicle is in a stolen state,
wherein, under said drive state of said engine where said key (3) has been extracted from said ignition switch (18), said door lock means is operated by using said key, so that said opening/closing means is locked and said burglar proof means is set in an alert state.

6. A unit according to any one of claims 1 to 4, comprising:
a keyless entry unit having a transmitting means for transmitting a predetermined peculiar signal and a receiving means provided in said vehicle for receiving said peculiar signal from said transmitting means for locking and unlocking said opening/closing means without said key; and
a burglar proof means having a stolen state detecting means for detecting said vehicle in a stolen state by detecting an opened/closed state of said opening/closing means, and an alarm means for actuation when said stolen state detecting means detects that said vehicle is in a stolen state;
wherein, under said drive state of said engine (20) where said key has been extracted from said ignition switch, said keyless entry unit is used, so that said opening/closing means is locked and said burglar proof means is set in an alert state.

7. A unit according to any one of the preceding claims, wherein, under said drive state of said engine (20) where said key (3) has been extracted from said ignition switch (18), when said key is inserted into said ignition switch, said engine drive controlling means opens said contact point of said ignition switch to stop said engine.

8. A unit according to any one of claims 1 to 6, wherein, under said drive state of said engine where said key has been extracted from said ignition switch, when said opening/closing means is unlocked by operating said door lock means, said engine drive controlling means opens said contact point of said ignition switch to stop said engine.

9. A unit according to any one of claims 1 to 6, wherein, under said drive state of said engine where said key has been extracted from said ignition switch, when said opening/closing means is unlocked by using said keyless entry unit, said engine drive controlling means opens said contact point of said ignition switch to stop said engine.

10. A unit according to claim 6, wherein, under said drive state of said engine where said key has been extracted from said ignition switch, when said opening/closing means is unlocked by using said keyless entry unit, said alert state of said burglar proof means is cancelled.

11. A unit according to any one of claims 5 to 10, wherein, under said drive state of said engine where said key has been extracted from said ignition switch, when said stolen state detecting means detects that said vehicle is in a stolen state, said engine drive controlling means opens said contact point of said ignition switch to stop said engine.

12. A unit according to any one of the preceding claims, wherein, under said drive state of said engine where said key has been extracted from said ignition switch, when said selected state detecting means detects that said select lever is shifted to a position other than said parking range, said engine drive controlling means opens said contact point of said ignition switch to stop said engine.

13. A unit according to any one of the preceding claims, wherein, under the condition that said drive state of said engine is maintained even when said key is extracted from said ignition switch, only when said key is inserted into said ignition switch and turn on, said select lever can be operated.

14. A keyless engine controlling unit for controlling an engine (20) of an automotive vehicle, comprising:
an ignition switch (18) for generating starting and stopping instructions of said engine by inserting and operating a key (3) thereinto;
a starter motor (24) for starting said engine;
a keyless entry unit having a transmitting means for transmitting a predetermined peculiar signal and a receiving means provided in said vehicle for receiving said peculiar signal from said transmitting means for locking and unlocking an opening/closing means such as a door without said key; and
an automatic transmission,
**characterised in that** said controlling unit further comprises:
a selected state detecting means for detecting a select lever (19) state of said automatic transmission; and
an engine drive controlling means for bypassing a contact point of said ignition switch (18),
wherein, when said selected state detecting means detects that said select lever (19) is positioned in a parking range, and said receiving means receives a signal for locking said opening/closing means under a locked state of said opening/closing means, said contact point of said ignition switch (18) is bypassed to operate said starter motor (24), so that said engine is started.

15. A unit according to claim 14, wherein, under said locked state of said opening/closing means, when said receiving means receives a signal for unlocking said opening/closing means and then receives a signal for locking said opening/closing means within a predetermined time, said contact point of said ignition switch is bypassed to operate said starter motor (24), so that said engine is started.

16. A unit according to claim 14 or 15, comprising an informing means for informing of said engine (20) being driven after verifying a drive state of said engine.

17. A unit according to claim 14, 15, or 16, wherein under said drive state of said engine where said receiving means of said keyless entry unit receives said signal for locking said opening/closing means, when said receiving means receives at least once said signal for locking said opening/closing means, said engine drive controlling means opens said contact point of said ignition switch (18) to stop said engine.

18. A unit according to claim 17, wherein said informing means informs of said engine in a stopped state after verifying a stopped state of said engine.

19. A unit according to any of the preceding claims, wherein said engine drive controlling means is provided as a single unit with an engine control unit for driving or stopping said engine.
